# EUROPEAN PATENT APPLICATION

(11) **EP 2 736 249 A1**
(43) Date of publication of application: **28.05.2014**
(21) Application number: 12275185.2
(22) Date of filing: 27.11.2012
(51) Int. Cl.: H04N 5/232

(54) **Imaging system and process**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

An imaging system and process is disclosed for imaging a scene comprising at least one target image. The system comprises a wide field of view imaging device for imaging the scene, a controller operable to store data representative of a location of the at least one target image within the imaged scene and a narrow field of view imaging device for imaging the at least one target image along an imaging axis. The system further comprises a steering arrangement for selectively steering the imaging axis across at least a portion of the imaged scene to direct the imaging axis at the at least one target image. The respective process thus enables a single narrow field of view imaging device to capture high resolution images of multiple targets within the imaged scene.

## Description

The present invention relates to an imaging system and process, and particularly, but not exclusively to an imaging system and process for imaging a scene comprising at least one target.

In order to view an extended or panoramic scene, it is necessary to employ a camera system having a wide angle of view so that the extended scene image can be received at the camera and thus viewed. However, the wide angle coverage of the scene typically results in a low resolution image unless very expensive, high pixel count cameras are employed. Accordingly, it is common to compliment a camera having a wide angle of view and a low resolution, with several separate high resolution, but narrow field of view cameras, which can be directed to areas of interest within the scene to provide the required image detail at the areas of interest. In this specification, the terms low resolution and standard definition are used to refer to sensors having pixel arrays which comprise less numbers of pixels than high definition or high resolution sensors. Typically for example, low resolution sensors may comprise an array of 800x600 pixels or less, whereas a high resolution sensor may comprise 1200x600 pixels or more.

For example, when surveying a populated area, such as a shopping centre or sporting event, it is common to use a mobile surveillance platform such as a vehicle comprising a closed circuit television (CCTV) system. The operators of the surveillance platform will typically have access to one or more fixed wide field of view (WFOV) cameras and several narrow field of view (NFOV) cameras or pan-tilt-zoom (PTZ) cameras. Within the crowd scene being surveyed, there may be several target areas that need to be monitored. These may comprise key access points, such as entrance and exit points, particular individuals within a crowd, or areas of interest, such as automatic teller machines (ATMs), banks and the like. While these targets will all be viewed simultaneously by one or more of the WFOV cameras, each target area requires an individual NFOV/PTZ camera and an associated operator to image a respective target in detail. Accordingly, the detailed monitoring of targets require many cameras and suitable mountings which may have implications for the installation, such as the vehicle, in terms of size, power, weight and cost. Also, each camera must be operated individually in order to provide a real time account of the target status.

According to a first aspect of the present invention, there is provided an imaging system for imaging a scene comprising at least one target, the system comprising:
a wide field of view imaging device for imaging the scene;
a controller operable to store data representative of a location of the at least one target within the imaged scene;
a narrow field of view imaging device for imaging the at least one target along an imaging axis; and,
a steering arrangement for selectively steering the imaging axis across at least a portion of the imaged scene, wherein,
the controller is operable to control the steering arrangement to direct the imaging axis at the at least one target.

Advantageously, the imaging system enables single, narrow field of view (NFOV) imaging device, such as a NFOV camera to image multiple targets within an extended scene, by scanning rapidly between the targets, while also enabling one or more of the targets to be tracked across the scene.

The steering arrangement preferably comprises at least one actuator for steering the imaging axis across at least a portion of the imaged scene. Accordingly, in situations in which it is necessary to monitor two or more targets, the steering arrangement is arranged to separately align the imaging axis at each target.

The steering arrangement comprises at least one moveable reflector which is moveable using the actuator. Preferably, the at least one moveable reflector comprises a first and second mirror, each pivotally mounted about a respective first and second axis to allow scanning of the imaging axis in two orthogonal directions. In this respect, the first and second axes preferably extend in substantially perpendicular directions.

In an embodiment of the present invention, the controller is programmable so that the system can be programmed to image one or more selected targets. In this respect, the imaging system advantageously comprises a user interface so that a user can program selected targets in said controller.

Preferably, the controller is operable to cause the NFOV imaging device to acquire a set of successive images for the at least one target, wherein the or each set comprises a video image of the respective target.

The controller further comprises a processor for processing the imaged scene from the wide field of view imaging device and one or more target images from the NFOV imaging device to track one or more of the targets. In achieving this tracking facility, the controller is operable to control the steering arrangement to cause the imaging axis of the NFOV imaging device to follow one or more targets.

To enhance the tracking facility, the imaging system may further comprise target image recognition means for identifying a target image captured by at least one of the WFOV imaging device and the NFOV imaging device. The image recognition means may comprise a face recognition algorithm for tracking a person for example, or an automatic number plate recognition algorithm for tracking a vehicle, for example.

In an embodiment of the invention, the NFOV imaging device comprises a lens arrangement to enable the NFOV imaging device to suitably focus at the or each target within the imaged scene.

According to a second aspect of the present invention, there is provided an imaging process for imaging a scene comprising at least one target, the process comprising the steps of:
imaging the scene using a wide field of view;
storing data representative of a location of the at least one target within the imaged scene;
imaging the at least one target along an imaging axis using a narrow field of view; and,
selectively steering the imaging axis across at least a portion of the imaged scene, to direct the imaging axis at the at least one target.

Preferably, the process further comprises storing an image of the at least one target at each respective target imaging step.

The process further comprises separately combining successive images of the at least one target to generate a video image of the at least one target.

The process is preferably arranged to image at least two targets within the imaged scene and thus further comprises selectively steering the imaging axis across at least a portion of the imaged scene to separately image the at least two targets. In this situation, the imaging process may further comprise acquiring a set of successive images for each target according to an imaging sequence. This may comprise a sequential sequence whereby each target is imaged in turn or a weighted sequence, whereby one or more targets are imaged more frequently than others.

Preferably, the process further comprises storing an image of the at least two targets at a respective step of the imaging sequence.

The present invention will now be described by way of example only and with reference to the accompanying drawings, in which:
Figure 1 is a schematic block diagram of an imaging system in accordance with an embodiment of the present invention;
Figure 2 is a flow chart of the steps associated with an imaging process according to an embodiment of the present invention; and,

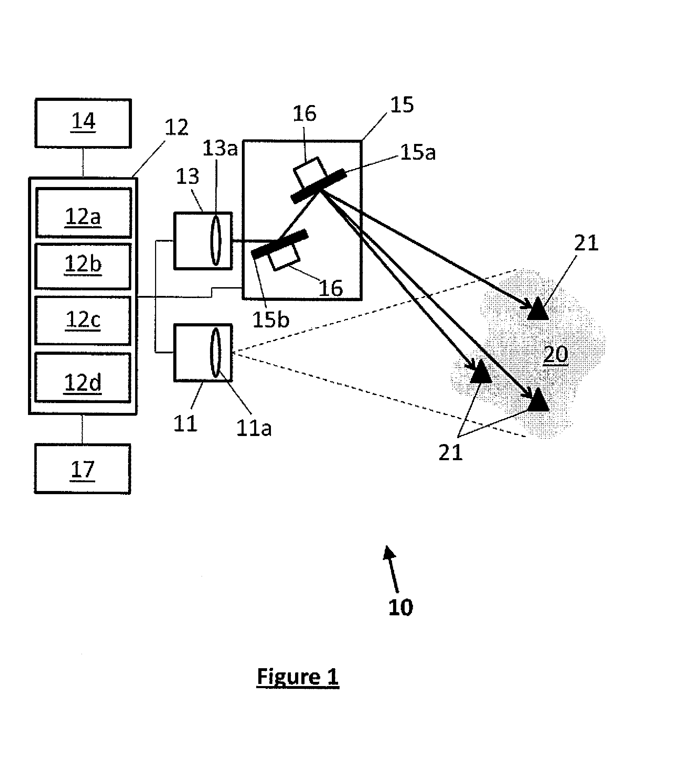

Referring to the drawings and initially to Figure 1, there is illustrated an imaging system 10 according to the present invention for imaging an environment 20, such as an airport terminal, crowds of people at a sporting event, or a city centre, for example. The system comprises a wide field of view (WFOV) imaging device, such as a WFOV camera 11 which is arranged to capture an image of an extended scene of the environment 20, to facilitate the surveillance of targets 21 at isolated locations within the scene.

The system 10 further comprises a controller 12 having a memory store 12a for storing location data representative of the isolated locations within the scene, and a narrow field of view (NFOV) imaging device, such as a NFOV camera 13, mounted adjacent the WFOV camera 11 for imaging the targets 21 at the isolated locations. In an embodiment, the WFOV and NFOV cameras 11, 13 may comprise a hyperspectral camera, and a camera operable in the visible region of the electromagnetic spectrum, respectively. However, in an alternative embodiment it is envisaged that the WFOV camera 11 may alternatively comprise a camera operable in the visible region of the electromagnetic spectrum and the NFOV camera 13 may comprise a thermal imaging camera, for example. In either embodiment, the WFOV camera 11 is arranged to acquire an image of the extended scene of the environment 20 whereas the NFOV camera 13 is arranged to image an isolated location within the environment 20. It is preferred that the NFOV camera 13 comprises a greater resolution than the WFOV camera 11 to provide a high definition image of the target 21. However, it is to be appreciated that the NFOV camera 13 may comprise a lower resolution than the WFOV camera 11 and still provide an improved definition of the target 21 compared with the WFOV camera 11, by virtue of the localised imaging of the NFOV camera 13 within the environment 20.

The WFOV and NFOV cameras 11, 13 are mounted sufficiently close to be in substantial optical alignment, whereby the optical axis or imaging axis of each camera are substantially parallel and separately comprise a lens arrangement 11a, 13a which enables each camera 11, 13 to suitably focus the scene environment 20 and targets 21, respectively.

The controller 12 is communicatively coupled with the WFOV and NFOV cameras 11, 13 and is arranged to receive image data from each camera 11, 13. The image data is processed by a processor 12b associated with the controller 12 for subsequent viewing on a display device 14. The image viewed by the NFOV camera 13 is determined by a steering arrangement 15 which is communicatively coupled with the controller 12 and which is arranged to align the imaging axis of the NFOV camera 13 with the desired target 21 in accordance with signals from the controller 12. In an embodiment, the steering arrangement 15 comprises at least one reflector, such as two mirrors 15a, 15b, separately mounted for rotation about mutually orthogonal axes by a respective actuator 16, to facilitate an X-Y scan of the scene imaged by the WFOV camera 11. However, it is envisaged that an initial bore-sighting of the NFOV camera 13 on a particular target may be achieved using a laser (not shown). The laser (not shown) may subsequently be used to illuminate or dazzle a potential target 21, or provide a measurement of the range of target 21 from the NFOV camera 13, for example. In an alternative embodiment, which is not illustrated, the actuator 16 may alternatively be arranged to re-orientate the NFOV camera 13 directly, to steer the imaging axis, thereby obviating the requirement for the at least one reflector.

The controller 12 further comprises a target image flagging module 12c which allows the location of potential targets 21 within the imaged scene to be flagged so that the higher resolution NFOV camera 13 may be directed at each of the targets 21 to acquire a detailed view of each target 21. The controller 12 further comprises a user interface 17 by which a user (not shown) may provide coordinates or the like from the WFOV image scene viewed on the display device 14, to identify potential targets 21 in the scene. In this respect, the user interface 17 may be used to program the controller 12 and/or the flagging module 12c to view particular targets 21 and add the targets 21 to a watch list.

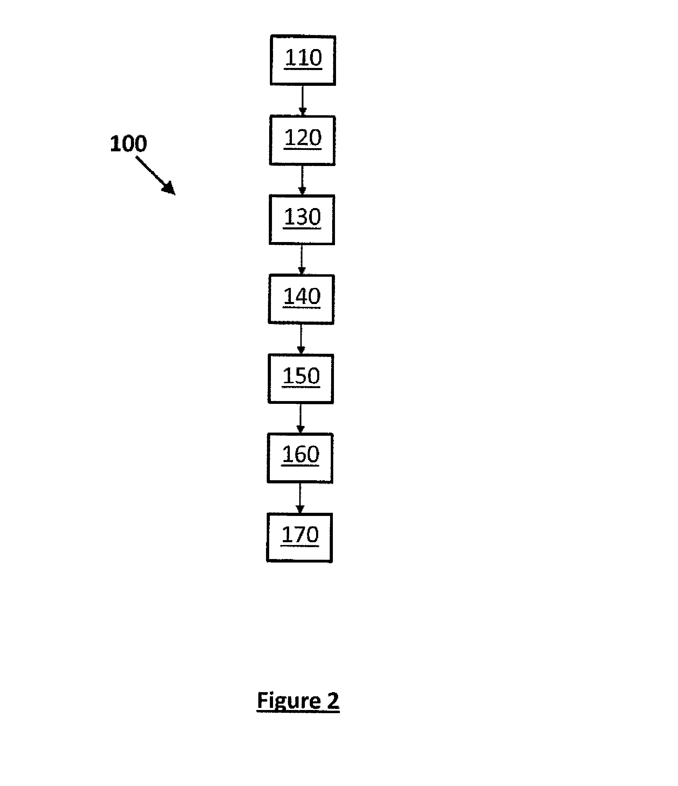

Referring to figures 2 of the drawings, there is illustrated an imaging process 100 according to the present invention for imaging a scene of an environment 21, such as a sporting event, using the system 10 described above, for example. The process 100 comprises first imaging an extended scene of the environment 20 using a WFOV camera 11 at step 110 to generate a global awareness of the environment 20. One or more targets 21 within the imaged scene may then be identified at step 120 or manually programmed into the controller 12 via a user interface device 17 at step 130. The controller subsequently steers the imaging axis of the NFOV camera 13 at step 140 by rotating the mirrors 15a, 15b using the actuators 16, so that the imaging axis become directed at each of the targets 21 in accordance with an imaging sequence. The imaging sequence may simply comprise a uniform stepping to each target 21 in turn or may comprise a weighted sequencing whereby one or more of the targets 21 receive a more frequent imaging by the NFOV camera 13 than other targets 21.

The NFOV camera 13 is arranged to capture a high resolution image of a target 21 at each step of the sequence and communicate this image to the controller which subsequently stores the image in the memory store 12a at step 150. Accordingly, a set of high resolution images may be captured for each target 21, which if required, may be captured at a sufficient rate so that the images may be processed to generate a reduced frame rate video of each target 21 at step 160. For example, in an environment comprising three targets 21 present in the imaged scene, the NFOV camera 13 operating at 21 frames per second (fps) and under a sequential imaging sequence will move to each target 21 in turn, thereby allowing the camera 13 to record imagery of each target 21 at 7fps. In an alternative embodiment however, the NFOV camera 13 operating at 20fps under a weighted imaging sequence may image one target 21 at a rate of 10fps while each other target 21 may be viewed at a rate of 5fps.

In this manner, the NFOV camera 13 is capable of providing NFOV images of each of a number of selected targets 21. The system 10 images multiple targets 21 with a single NFOV camera 13 by rapidly scanning the imaging axis of the NFOV camera 13 to point at different areas within the scene imaged by the WFOV camera 11. Depending on the speed of the steering arrangement 15 and the number of targets 21, a target image may be captured five or more times per second to give a reduced frame rate video.

In an embodiment of the present invention, the system 10 and particularly the controller further comprises tracking algorithms which, upon designating a target image within a WFOV image, the controller 12 may shift the imaging axis relative to the imaged scene at step 170, as the particular target moves around the imaged scene. In addition, the controller 12 may be arranged to track a number of targets 21 using the NFOV camera 13 and then control the WFOV camera 11 to pan, tilt or zoom if the targets 21 appear to be moving in a direction out of the imaged scene. Again, in this modification, a single NFOV camera 13 may track a number of independently moving targets 21 within the same WFOV scene.

The controller 12 of the imaging system 10 may further comprise image recognition modules 12d, for example automatic face detection and recognition and automatic number plate recognition (vehicle registration number recognition). Thus, having designated an individual or a vehicle of interest (not shown), the individual or vehicle may be tracked as it moves through the imaged scene captured by the WFOV camera 11.

Such a system could be used in an airport whereby an arrival or departure hall may be monitored using an imaging system 10 as set out above with the WFOV camera 11 monitoring a large area of the hall (not shown), and the NFOV camera 13 being used to zoom in on particular targets 21, such as visual elements or individuals within the viewed scene. With automatic face recognition, the NFOV camera 13 may be used to capture high resolution images of individual faces which are then processed by the processor 12b for comparison with a databank of individuals of interest, with matches being located and tracked.

In a sporting event or a riot, an imaging system 10 as described may be used to monitor multiple known troublemakers or friction points with each of the multiple targets 21 being monitored virtually simultaneously, and may be deployed on a mobile platform such as a police vehicle (not shown).

In an alternative embodiment, it is envisaged that the scanning motion of the NFOV camera 13 may also used to catalogue all image areas of the environment 20 as a high resolution image, over several seconds. These separate images may then be processed by the processor 12b and mosaicked to produce a high resolution image of the environment 20.

## Claims

1. An imaging system for imaging a scene comprising at least one target, the system comprising:
a wide field of view imaging device for imaging the scene;
a controller operable to store data representative of a location of the at least one target within the imaged scene;
a narrow field of view imaging device for imaging the at least one target along an imaging axis; and,
a steering arrangement for selectively steering the imaging axis across at least a portion of the imaged scene, wherein,
the controller is operable to control the steering arrangement to direct the imaging axis at the at least one target.

2. An imaging system according to claim 1, wherein the steering arrangement comprises at least one actuator for steering the imaging axis across at least a portion of the imaged scene.

3. An imaging system according to claim 2, wherein the steering arrangement comprises at least one moveable reflector which is moveable using the actuator.

4. An imaging system according to claim 3, wherein the at least one moveable reflector comprises a first and second mirror, each pivotally mounted about a respective first and second axis to allow scanning of the imaging axis in two orthogonal directions.

5. An imaging system according to any preceding claim, wherein the controller is programmable so that the system can be programmed to image one or more selected targets.

6. An imaging system according to any preceding claim, wherein the controller is operable to cause the near field of view imaging device to acquire a set of successive images for the at least one target, wherein the or each set comprises a video image of the respective target.

7. An imaging system according to any preceding claim, wherein the controller further comprises a processor for processing the imaged scene from the wide field of view imaging device and one or more targets from the near field of view imaging device to track one or more of the targets.

8. An imaging system according to claim 7, wherein the imaging system further comprises target image recognition means for identifying a target image captured by at least one of the wide field of view imaging device and the narrow field of view imaging device.

9. An imaging system according to claim 8, wherein the image recognition means comprises a face recognition algorithm.

10. An imaging system according to claim 8 or 9, wherein the image recognition means comprises or further comprises an automatic number plate recognition algorithm.

11. An imaging process for imaging a scene comprising at least one target, the process comprising the steps of:
imaging the scene using a wide field of view;
storing data representative of a location of the at least one target within the imaged scene;
imaging the at least one target along an imaging axis using a narrow field of view; and,
selectively steering the imaging axis across at least a portion of the imaged scene, to direct the imaging axis at the at least one target.

12. An imaging process according to claim 11, further comprising storing an image of the at least one target at each respective target imaging step.

13. An imaging process according to claim 11 or 12, further comprising separately combining successive target images to generate a video image of the at least one target.

14. An imaging process according to any of claims 11 to 13, wherein the process is arranged to image at least two targets within the imaged scene and further comprises selectively steering the imaging axis across at least a portion of the imaged scene to separately image the at least two targets.

15. An imaging process according to claim 14, wherein each target is imaged according to an imaging sequence.
